Europäisches Patentamt

European Patent Office

Office européen des brevets

(11) Publication number: **0 452 560 A1**

# EUROPEAN PATENT APPLICATION

(21) Application number: 90124924.3

(22) Date of filing: 20.12.90

(51) Int. Cl.⁵: **B65B 61/20**, B65B 35/50,
B65G 57/00, B65G 47/08

(30) Priority: 20.04.90 IT 2009490

(43) Date of publication of application:
23.10.91 Bulletin 91/43

(84) Designated Contracting States:
AT BE CH DE DK ES FR GB GR IT LI LU NL SE

(71) Applicant: Meneghetti, Italo
Via Gramsci, 113/31
I-56048 Torre del Lago (Lucca)(IT)

(72) Inventor: Meneghetti, Italo
Via Gramsci, 113/31
I-56048 Torre del Lago (Lucca)(IT)

(74) Representative: Di Iorio, Giuseppe, Dr.-Ing.
c/o NOVELTY SERVICE Galleria Buenos
Aires, 15
I-20124 Milano(IT)

(54) Packing machine for paper or cardboard packets and the like.

(57) The present invention refers to a machine suitable for packing packets (2) of sugar, meal and the like that are disposed at first in rows and then in strata and finally stacked on a wood pallet (9). The packets are disposed with the main dimension oriented in vertical direction for getting a greather mechanical resistance of the bottom packet stratum. Each stratum is separated from the following stratum by means of a half-rigid carboard sheet for making better the stacking of strata and the load stability.

Rank Xerox (UK) Business Services

The present invention refers to the field of machines for carrying out the packing of paper, cardboard, plastic packets and the like onto a pallet. The known machines usually allow the loading of a pallet with packets of sugar, meal and the like having the main dimension disposed in horizontal direction, that is laid down.

Usually these machines show a loading plane generally in the form of rollerway, on which the so laid packets slide.

This layout of packets shows the drawback that the packets of the lowest stratum of packing are more squashed by the weight of superior strata and therefore they are submitted to unglueing and tearings with following output of the product.

The present invention has the aim of fulfilling a packing machine for continuous and automatic packing of paper, cardboard, plastic packets and the like, holding granular, mealy, cream or liquid products, that arrive to the machine in vertical position or standing position, and keep this position during the whole machining cycle until its stacking in strata, that allows to get a load applied onto the lowest strata of the packing greather than the load obtained with conventional machines.

Further the invention proposes the fulfilment of a machine with high productivity, that allows to change easily the dimensions of strata for getting packings of wished dimensions.

The machine according to the present invention is characterized in that it can receive the packets in vertical position and lay them at first in ordered groups, then in strata and finally stack the strata onto a pallet, with packets being in standing position, while carboard sheets made of half-rigid material are interposed between a stratum and the following one, the whole operation being made in continuous and completely automatic running.

In an embodiment of the invention, the machine includes a device for automatic feeding of packet rows to a conveyor belt driven by means of a pusher. Then a second pusher provides to transfer the packet rows from said conveyor belt to a rollerway that has the aim of accumulating a series of packet rows forming a stratum.

In the following, each stratum formed onto the rollerway is pushed, by means of a third pusher, onto a removable support blade that, on its turn, provides to deposit the stratum onto a pallet.

Another characteristic of the packing machine is the presence of a box housing in which a trolley supporting the pallet can slide along vertical guides.

The trolley is driven upwards or downwards by means of a geared motor through a chain device.

The traverse of the trolley downwards during the loading phase of the packet strata occurs in following steps.

Another characteristic of the packing machine is the use of a vacuum sucker device that allows to draw a carboard sheet from a carboard sheet store and transport and lay it onto a stratum of packets laid onto the support blade or already laid onto the loading plane of the pallet.

A further characteristic of the packing machine is the use of suitable control means, as photocells and sensors, that allow to control the progress mechanisms of packets, pushers, sucker device and pallet traverse for forming automatically at first packet groups or rows, then packet strata and finally stacking strata onto the pallet.

Finally the machine is provided with a loading device for empty pallets suitable for inserting an empty pallet one by one in the bottom of the box housing and unloading contemporaneously to the outside the pallet loaded with packet strata.

The present invention is described with wider details in the following description made with reference to the annexed drawing, in which:

Figure 1 is a plan view of the packet feeding device at the machine input; and

Figure 2 is a schematic assembly view of the machine.

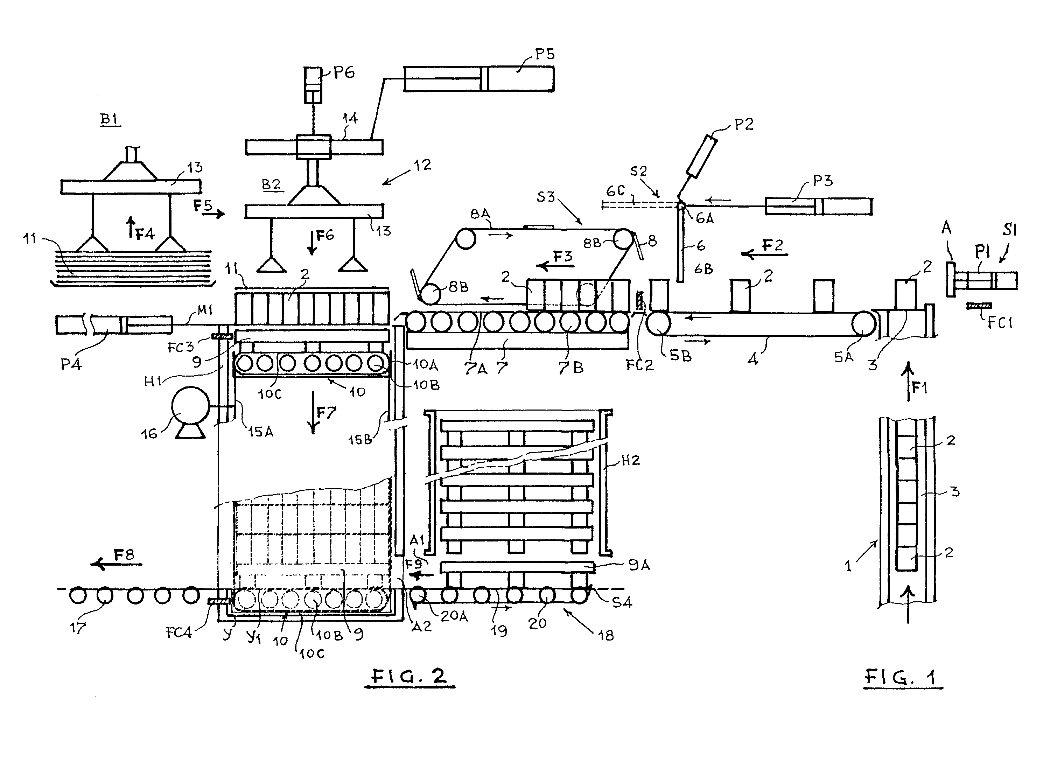

Making now reference to the Figure 1, it is shown by 1 the feeding device of single packets 2, e.g. filled with sugar, already prepared and closed by a filling machine, that are loaded automatically within the packing machine that is the object of the present invention. Said feeding device includes a conveyor belt 3 that slides along the direction of the arrow F1 at the input of machine and on which the packets are laid in standing position, the one after the other.

Making now reference to the Figure 2, on one side of the feeding device 1, it is foreseen, in the external side of the machine, a first pusher device S1 that has the function of pushing each packet row formed onto the conveyor belt 3 to a driven conveyor belt 4, moving perpendicularly to the direction of the feeding conveyor belt 3. Said device includes a pusher element A driven by a pneumatic or hydraulic cylinder P1, controlled by a sensor FC1, that surveys the end of a packet row onto the conveyor belt 3.

In this manner, adjusting the sensor or limit switch FC1, it is possible to obtain rows formed by a well established packet number, establishing in this manner a dimension (length) of the packet stratum to be stacked onto the pallet.

The conveyor belt 4 is formed by a rubberized or plastic conveyor belt or a metallic net motor-driven and guided by rollers 5A and 5B; it is used for transporting, in the direction of arrow F2, the spaced packet rows 2 from its input until its end position or limit stop near the roller 5B.

In the lateral side of the conveyor belt 4 the idle guide devices (not represented) are foreseen, having really the function of guiding the packet rows during the progress stroke.

After each row has reached the final position onto the conveyor belt 4, it is pushed ahead by a second pusher device S2, including a plate 6A mobile around an axle 6A for assuming two positions, a work position 6B and a wait position 6C under the control of a hydraulic or pneumatic cylinder P2 by means of a lever system shown schematically.

Another cylinder P3 or a chain system shall drive the plate 6 to be moved parallel ahead when it assumes the perpendicular or work position shown in figure, for transferring the packet row 2 from the limit stop of the conveyor belt 4 to the beginning of the rollerway 7 formed by a conveyor belt 7A sliding freely onto a series of rollers 7B mounted idle onto the related axles. After the transfer of the first packet row the plate 6 is brought again into the wait position 6C by the cylinder P2 and goes on the loading of following packet rows onto the rollerway 7 in the direction of the arrow F3, until its complete filling and this action goes on until it is completed a stratum of flanked rows to be loaded onto a wood pallet.

A photocell sensor FC2 counts the input of the packet rows that are loaded onto the rollerway 7 and when the loading is completed it causes the operation of a third pusher device S3 including at least a metallic bar 8, which drives ahead the whole packet stratum formed onto the rollerway.

In a similar manner, adjusting the photocell FC2, it shall be possible to obtain packet strata formed by a well established number of packet rows onto the rollerway and then to establish the other dimension (width) of the strata to be loaded onto the pallet.

Each metallic bar 8 is hinged at one end to two lateral chains 8A turning around the gears 8B, at least one of which being driven by a geared motor (not represented).

Immediately after the rollerway 7 output it is foreseen a box housing H1 that is used for holding a pallet 9 sliding in vertical direction. Over this housing H1 it is foreseen a removable metallic blade M1 driven in its ahead and back movement by a pneumatic or hydraulic cylinder P4. This blade has the aim of receiving and supporting the packet strata 2 that arrive from the rollerway 7 and, once it is loaded, disappearing or being removed under the control of said cylinder P4 from the position shown in figure.

During the disappearing movement, the blade unloads the packet stratum laid thereonto onto the underlying pallet 9 that, on its turn, is supported by a trolley 10, also this being sliding in vertical direction into the housing H1. A sensor or limit switch FC3 adjusts the height of the pallet in the top position of the housing H1 or in the position of loading start of the packet strata 2.

On a lateral side of the box housing H1 and at a level higher than the rollerway 7, it is foreseen a store of half-rigid carboard sheets 11 or other suitable material. These carboard sheets are drawn, one by one, by a sucker device 12 including a trolley 13, 14 driven in the horizontal direction or in the direction of the packet flow by means of a pneumatic or hydraulic cylinder P5 and in the vertical direction by another cylinder P6.

The figure shows the sucker device 12 in two positions B1 and B2.

The position B1 is the drawing position of a carboard sheet 11 from the store and the position B2 is the delivery position of the carboard sheet onto the packet stratum laid onto the blade M1.

The arrows F4, F5, F6 show the loading movement of carboard sheets 11 starting from the related store.

The carboard sheets are half-rigid for getting a better stacking of strata and a better stability of the whole packing. The suckers are of the vacuum pneumatic type and, for this aim, they can be connected to a rotating blade vacuum pump (not represented).

As it shall be described in the following, the pallet 9, during the loading phase of packet strata, is moved downwards (see arrow F7) with a step movement, the stroke of each step being equal to the height of the packet strata to be packed, so that said pallet can receive in order, one onto the other, the strata unloaded in succession by the blade M1.

The trolley 10 supporting the pallet 9 slides along vertical guides hold in the housing H1, driven by two lateral chains 15A, 15B, driven by a geared motor 16 that allows continuous or step traverses of the trolley.

The trolley 10 is joined to the above mentioned chains by means of two lateral shoulders 10A of the support structure of the same trolley, which, in its inside, shows idle rollers 10B, around which a metallic conveyor belt 10C can slide, with its running being described in the following.

The trolley 10 can slide from the top position shown in Figure 2 until the bottom plane Y of the housing H1 and viceversa. The trolley is then brought to the lower position Y when the pallet 9 laid thereonto is loaded with all packet strata foreseen for the packing. In the lower position the pallet together with the whole packet load (see representation in dotted lines) is unloaded to outside in the direction of the arrow F8, onto a rollerway 17 for being drawn here from a trolley of the fork type. In this phase the pallet slides onto the plane Y1 of the conveyor belt 10C as this last belt can slide onto idle rollers 10B pushed by an empty pallet 9A coming from an empty pallet housing or store H2.

After the transfer of the loaded pallet onto the rollerway 17, a new loading cycle can start, as the new pallet 9A is located onto the plane Y1 at the place of the leaded pallet 9.

The support trolley of the new empty pallet 9A carries out the return stroke upwards until it reaches the top position into the housing H1 with a continuous movement.

In said position the pallet is ready for the new loading cycle of the packet strata 2.

The insertion of each empty pallet 9A onto the trolley 10 positioned onto the bottom plane Y1 is obtained with the aid of a pallet dragging mechanism 18, including a closed chain 19 turning around rollers 20, at least one of which, indicated by 20A, being driven by a geared motor (not represented).

The empty pallets 9A are supplied from the housing H2, also this having a box shape, through a lateral lower opening A1 that is located in conjuction with an input opening A2 of the housing H1 made at the level of the loaded pallet to be ejected.

The chain 20 shows at least a pusher S4, formed by an iron tooth, that has the aim of pushing the empty pallet, laid onto the same chain, until said pallet assumes the right position on the trolley located onto the bottom of the housing H1, this position being detected by a sensor or limit switch FC4.

Then contemporaneously to the insertion of the empty pallet the filled pallet is pushed towards outside onto the rollerway 17.

Then the trolley 10 is lifted with the empty pallet until the top loading position of the first packet stratum belonging to a new loading cycle.

Now it is described the running of the machine object of the present invention.

The packet rows transported in spaced relationship by the conveyor belt 4 are collected in a complete row stratum onto the rollerway 7, the loading of which being surveyed by the photocell FC2. In the following this photocell controls the rotation of the chain 8A and then of the metallic bar 8, which is laid onto the last packet row deposited onto the rollerway 7 by a movement from high to low position and, by means of this row, pushes ahead all flanked packet rows already accumulated onto the rollerway, transferring them onto the support blade M1.

At this moment the sucker device 12 shall be brought from the drawing position B1 to the loading position B2 by means of the cylinder P5 and, after having reached this position B2, it shall be lowered by means of the cylinder P6 onto the packet stratum present onto the blade M1 for laying a carboard sheet 11 onto said stratum.

Then the sucker device returns to the rest position B1 under the action of cylinders P6 and P5.

In the meantime the metallic blade M1 is drawn (removed) from the extracted position shown in figure by means of the cylinder P4 and, in this manner, all packets, that were supported by said blade, fall onto the underlying pallet while they are guided by the walls of the box housing H1.

Said pallet was already positioned at approximatively 2 centimeters under the blade. This position of the pallet is assured by the trolley 10 that is drawn upwards by means of the chains 15A and 15B until the right height adjusted by the limit switch or photocell FC3.

When a first packet stratum is deposited onto the pallet 9, the photocell FC3 is darkened and contemporaneously it gives the consent to the geared motor 16 that drives the trolley downwards until the photocell is no more darkened by the packet stratum and so on, so that the downward stroke or pallet loading occurs in steps, each step having a stroke equal to the height of the packet stratum, assuring in this manner that the pallet loading plane is always located immediately under the blade M1 supplying an advantage for laying strata onto said blade that happens in ordered manner.

When the machine has loaded the wished number of packet strata onto the pallet, the trolley 10 continues its downstroke with continuous movement until it is laid onto the bottom plane Y of housing H1.

For getting the transfer of the loaded pallet onto the rollerway 17, an empty pallet coming from the store H2 is pushed against the filled pallet in the direction of arrow F9.

The traverse of the empty pallet is caused by the pusher S4 driven by the chain 19.

In this phase the pusher S4 is laid against the empty pallet and pushes the same pallet to move it to the position of loaded pallet. The insertion of the empty pallet in this position is possible as the loaded pallet can slide onto idle rollers 10B of the trolley 10 stopped onto the bottom of housing H1.

Finally the empty pallet assumes the position of the filled pallet and as soon as the photocell FC4 surveys its exact position onto the plane Y1, it sents the consent to the geared motor 16 that controls the upstroke of the trolley-empty pallet assembly until the height of the photocell FC3.

So the new loading cycle of packet strata can start again.

As said, a main advantage of the present machine is that it allows to fulfil in a continuous and completely automatic manner the packing of the packets with strata of wished dimensions and the packets are introduced and keep a vertical layout in the machine (in standing position) during the whole machining cycle until its stacking in strata. Using this layout, it is increased the resistance to squashing of packets of lower strata of staking, that in this manner can include a greather number of strata and then reach a greather height. In fact it was noticed that, using the machine according to the invention, it is possible to reach packet stackings until 12-15 q with respect to 7-8 q obtained as maximum with the conventional machines.

The greater height of packings allows also an increased height of the loading onto veihicles during its transport.

Further the production speed or capacity of the machine is increased.

In fact the machine can receive at its input 200-250 packets per minute with respect to the maximum loading of 90 packets applied in conventional machines.

Naturally all modifications in the described and shown solutions are possible without departing from the field of the invention. As variant the packets 2 can be supplied to the conveyor belt 4 under the form of double rows or under the form of ordered groups and, in this last case, the strata laid onto the rollerway 7 are formed by ordered packet groups.

Further the carboard sheets 11 can be deposited onto the packet stratum when the stratum is already laid onto the pallet loading plane.

Further the empty pallet housing H2 represented in Figure 2 in proximity of the housing H1 can be foreseen in a position far from the machine.

Finally it was precedently made reference to paper, cardboard, plastic packets and the like holding sugar, but obviously said packets can hold similar products, such as salt, rice, meal, creams, drinks, etc..

## Claims

1. An automatic machine for the continuous packing of strata of closed paper, cardboard, plastic packets and the like, holding granular, mealy, cream or liquid products, in particular for the packing of sugar or rice packets onto a pallet and the like, characterized in that it includes:

   a) a motor-driven conveyor belt (4) on which groups of packets formed on a feeding device (1) located at the input of the machine are transferred in succession by means of a first pushing device (S1) and each group being formed by an established number of packets (2); each group of packets being transported by said motor-driven conveyor belt from a start or input position to an end or limit stop position;

   b) an idle rollerway (7) located at the output of the motor-driven conveyor belt (4), on which the packet groups moved by the conveyor belt as soon as each group reaches the limit stop position of said conveyor belt are transferred in succession by means of a second pusher device (S2); each packet group is pushed onto the rollerway causing by shock the ahead traverse of the group or groups already transferred onto said rollerway, so that a progressive accumulation of packet groups forming an ordered stratum of packets is obtained on said last rollerway; each of said strata being removed from the rollerway by means of an ahead push caused by a third push device (S3) as soon as the stratum corresponds to the stratum to be loaded onto the pallet (9).

   c) a removable plane (M1) located at the output of the rollerway, suitable for assuming, under the action of drive means, a work position at the rollerway output for receiving the following strata of packets coming from the same rollerway and a wait position far from this output, for reaching which its traverse causes the fall or laying of each received packet stratum onto an underlying loading plane supported by the pallet.

   d) a trolley (10) on which the pallet is laid, sliding in vertical direction, under the action of drive means, from a lower or bottom position (Y) to a top position corresponding to the position of pallet loading start immediately under the removable plane; the drownstroke traverses of the trolley-pallet assembly during the loading phase being made in steps each having a stroke equal to the height of the packet stratum and being carried out as soon as after the laying of each packet strata onto the loading plane by means of removable plane, so that during the downstroke step by step of said assembly it is obtained an increasing stacking of overlapped packet strata onto the pallet, and

   e) an introduction mechanism for empty pallets located at the level of lower position (Y1) of the filled pallet suitable for moving an empty pallet in said position and contemporaneously moving the filled pallet from said position by means of a sliding onto the underlying trolley stopped or steady in the lower or bottom position (Y).

2. An automatic machine according to claim 1, characterized in that it further includes transport means of a half-rigid carboard sheet (11) from a carboard sheet store until the top side of each packet stratum, while it is located onto the removable plane or after its laying onto the pallet loading plane, so that the following strata of the stacking are separated by carboard sheets.

3. An automatic machine according to claims 1 and 2, characterized in that the feeding device (1) of packets (2) at the input of the machine is formed by a feeding conveyor belt (3) sliding in a direction perpendicular to the motor-driven conveyor belt (4), on which the packet groups are formed by packet rows.

4. An automatic machine according to preceding claims, characterized in that the pushing device (S1) moving packet groups or rows from the feeding conveyor belt (3) to the motor-driven conveyor belt (4) includes a pusher element (A) driven by a pneumatic or hydraulic cylinder (P1) controlled on its turn by a sensor (FC1) sensible to the packet number (2) of the packet group or row formed onto the feeding conveyor belt (3).

5. An automatic machine according to preceding claims, characterized in that the pusher device (S2) moving packet groups or rows from the motor-driven conveyor belt (4) to the rollerway (7) includes a bar (6) turning between a work position (6B) and a wait position (6C) under the control of a pneumatic or hydraulic cylinder (P2) and in that a second pneumatic or hydraulic cylinder (P3) causes the parallel traverses of the bar when said bar is in vertical or work position (6B).

6. An automatic machine according to preceding claims, characterized in that the idle rollerway (7) includes a rubberized conveyor belt or closed metallic net (7A) sliding around idle rollers (7B).

7. An automatic machine according to preceding claims, characterized in that the pusher device (S3) that transfers the packet strata from the rollerway (7) to the removable plane (M1) includes two closed lateral chains (8A) driven and guided by rollers (8B), which drive at least a hinged metallic bar (8) suitable for pushing the completed stratum of packets accumulated onto the rollerway onto the removable plane (MI), the chain rotation being controlled by a sensor (FC2) sensing the number of packet groups or rows arriving onto the rollerway.

8. An automatic machine according to preceding claims, characterized in that the removable plane at the output of the rollerway (7) includes a support plane (M1) sliding ahead and back, respectively for receiving and laying the packet strata onto the pallet loading plane under the control of a pneumatic or hydraulic cylinder (P4).

9. An automatic machine according to preceding claims, characterized in that the drawing and transport means for moving the half-rigid carboard sheets (11) from the carboard sheet store until its laying onto the removable plane (M1) include a sucker device (12), whose traverses occur following linear strokes driven by pneumatic or hydraulic cylinders (P5, P6).

10. An automatic machine according to preceding claims, characterized in that the pallet trolley includes a conveyor belt (10C) sliding freely around idle rollers (10B), mounted onto a support structure (10A).

11. An automatic machine according to preceding claims, characterized in that the drive means of the pallet trolley include a geared motor (16), joined to the support structure (10A) of the trolley by means of a chain drive system (15A, 15B) and that allows the sliding of the trolley-pallet assembly (10, 9) with a continuous or step by step movement.

12. An automatic machine according to preceding claims, characterized in that the trolley-pallet assembly slides into a box housing (H1) and the top or pallet loading start position, immediately under the removable blade, is detected by a sensor (FC3).

13. An automatic machine according to preceding claims, characterized in that the pallets introduction mechanism includes a conveyor belt or closed chain (19) driven and guided by rollers (20, 20A) having at least a pusher (S4) having the form of a tooth, suitable for pushing an empty pallet (9A) coming from an empty pallet housing (H12) against the filled pallet for removing said filled pallet from the bottom position (Y1) and contemporaneously the empty pallet being positioned in said position under the control of a sensor (FC4).

EP 0 452 560 A1

FIG. 2

FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 614 285 (LANGSTON MACHINE) <br> * page 3, line 4 - page 5, line 34; figures * <br> — — — | 1-5,7,8,9, 12,13 | B 65 B 61/20 <br> B 65 B 35/50 <br> B 65 G 57/00 <br> B 65 G 47/08 |
| Y | US-A-4 026 422 (A. LEENAARDS) <br> * column 4, line 8 - column 5, line 65; figures * <br> — — — | 1-5,7,8,9, 12,13 | |
| Y | GB-A-3 394 65 (J. ATKINSON) <br> * page 3, line 39 - line 99; figures * <br> — — — | 3,4 | |
| Y | GB-A-2 179 018 (MOLINS) <br> * page 1, line 98 - page 2, line 29; figures * <br> — — — | 5 | |
| A | DE-A-3 009 361 (NUTRO) <br> — — — | | |
| A | CH-A-4 661 36 (SAPAL) <br> — — — — — | | |

| TECHNICAL FIELDS SEARCHED (Int. Cl.5) |
|---|
| B 65 B <br> B 65 G |

The present search report has been drawn up for all claims

| Place of search | Date of completion of search | Examiner |
|---|---|---|
| The Hague | 06 August 91 | JAGUSIAK A.H.G. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document